# EUROPÄISCHE PATENTSCHRIFT

(11) **EP 1 772 404 B1**
(45) Veröffentlichungstag und Bekanntmachung des Hinweises auf die Patenterteilung: **31.12.2008**
(21) Anmeldenummer: 06020888.1
(22) Anmeldetag: 05.10.2006
(51) Int. Cl.: B65G 53/56

(54) **Rohrweiche**
Pipe switch
Aiguillage de tuyau

(30) Priorität: 06.10.2005 DE 102005048166
(43) Veröffentlichungstag der Anmeldung: 11.04.2007
(73) Patentinhaber: Zeppelin Silos & Systems GmbH, 88045 Friedrichshafen (DE)
(72) Erfinder: Müller, Robert, D-88718 Daisendorf (DE)
(74) Vertreter: Riebling, Peter

(56) Entgegenhaltungen:
- DE-A1- 3 922 240
- DE-C2- 4 102 008

## Beschreibung

Die Erfindung betrifft eine Rohrweiche mit verbessertem Übergang an den Anschlussstutzen, wobei ein Eingang und zwei Abgänge gebildet werden und ein Drehschieber mit einem geradlinig ausgebildeten Innenrohr vorgesehen ist.

Der Eingang der Rohrweiche kann somit mit den beiden Abgängen über den Drehschieber so verbundenen werden, dass zwei verschiedene Austrittsrichtungen wechselweise möglich sind.

Die Problematik solcher Weichen liegt in dem geometrischen Stoß, der entsteht, wenn der Drehkörper aus der Parallelität in den Winkelabgang schwenkt oder zurück, je nachdem welche Lösung vom Konstrukteur favorisiert wurde.

Die DE 41 02 008 C2 schlug vor, durch Verengung oder Erweiterung im Eingangsbereich, je nach Strömungsrichtung, Strömungsschatten zu akzeptieren, mit dem Nachteil, möglicherweise Schüttgutvermischungen in Kauf zu nehmen, hatte aber dafür zwei stoßfreie Abgänge.
Die ältere DE 39 22 240 verlagerte den Rohrknick in das Drehteil, hatte dafür bei Parallelität Eingang/Ausgang eine herzförmige Sonderkontur im Gehäuse, die z. B. bei notwendiger Edelstahlauskleidung der Anschlussstutzen an dieser Stelle nicht zu beherrschen war.

Die Schwierigkeit bestand darin, dass man bei einer Edelstahlauskleidung der Anschlussstutzen eine Auftrags-Spritzschicht aufbringen musste, was den Anwendungsbereich bei diversen Schüttgütern erheblich einschränkte und einen vergrößerten Arbeitsaufwand verursachte.

Bisher ließ sich der geometrische Stoß nur durch die Wahl von kugelähnlichen Drehkörpern verringern, mit der Schwierigkeit, dass die Gehäuse aus Montagegründen zweiteilig ausgeführt werden müssen. Die Einbringung von Gehäusedichtungen wird damit auf das Äußerste erschwert.

Aufgabe der vorliegenden Erfindung ist es deshalb, eine Rohrweiche genannter Art so weiterzubilden, dass bei Verwendung der Rohrweiche als Verteiler- oder Sammelorgan in konstruktiv und fertigungstechnisch einfachster Weise und preiswertester Ausgestaltung ein absolut stoßfreier, nahezu 100 % runder Übergang zwischen den Anschlussstutzen des Gehäuses und der Durchgangsbohrung des Drehschiebers erreicht wird.

Zur Lösung der gestellten Aufgabe ist die Erfindung durch die technische Lehre der Ansprüche 1 und 5 gekennzeichnet.

Wesentliches Merkmal der Erfindung ist, dass auch bei Rohrweichen mit walzenförmigen Drehschiebern ein geometrischer Stoß beseitigt werden kann, wenn alle drei Ein- und Abgänge sowie die jeweils gegenüberliegende Kontur der Drehschieberbohrung in gleicher Form ausgeführt werden.

Erfindungsgemäß werden in der Rohrweiche im Bereich des Einganges und der beiden Abgänge jeweils zwei gehäuseseitige, taschenförmige, spiegelsymmetrisch zur Längsmittenachse ausgebildete Formflächen als taschenförmige Vertiefung in dem Material der Rohrweiche eingearbeitet, wobei diesen gehäusefesten Formflächen stoßfrei und übergangslos anschließende Formflächen im Drehschieber gegenüberliegen, die in das Material des Drehschiebers vertieft eingearbeitet sind.

Dies hat die vorteilhafte Konsequenz, dass bei modularem Aufbau der Rohrweiche bedingt durch schüttgutbedingte Anforderungen, unterschiedliche Werkstoffe und die verschiedensten Dichtungsausführungen verwendet werden können, ohne dass die fast 100 % runde, stoßfreie Geometrie der Rohrweiche in beiden Stellungen beeinträchtig wird, egal ob ein Ausgangswinkel von 45° oder 90° zugrunde liegt. Damit wird eine Universal-Weiche geschaffen, die ausgehend von einer Grundausführung mit vorgegebener, verfahrenstechnisch unbedenklicher Geometrie jede Anforderung der schüttguthandhabenden Industrie erfüllen kann.

Die gleiche Form aller drei Übergangsflächen erreicht man, indem das Bearbeitungswerkzeug in dem gewählten Winkel des Abzweiges, z. B. von 45° so von beiden Seiten in die Durchgangsbohrung des Drehschiebers einfährt, dass das Werkzeug an der Stelle den Bearbeitungsvorgang genau auf Höhe der Mittellinie beendet, an der die Bearbeitungslinie mit der Drehschieberbohrung einer halben Ellipsenschnitt bildet. Die sich ergebende Kontur wird auf die drei Ein- und Abgänge des Weichengehäuses durch Bearbeitung oder Formgießen übertragen, so dass beim Positionswechsel des Drehschiebers von Gerade nach Abgang oder zurück, die gleichen Formen sich decken.

Damit besteht der Vorteil, dass es für die gehäuseseitige Bearbeitung der dort angeordneten Formflächen mehrere Möglichkeiten bestehen.

In einer ersten Ausgestaltung kann es vorgesehen sein, dass die beabsichtigten Formflächen bereits schon in der Gussform vorhanden sind und dann durch eine entsprechende, spannabhebende Bearbeitung nachbearbeitet werden, um so einen übergangslosen, stoßfreien Übergang zwischen den Formflächen am Drehschieber und den gehäuseseitigen Formflächen zu erreichen.

In einer anderen Ausgestaltung kann es vorgesehen sein, dass das Gehäuse der Rohrweiche keine speziellen Angussflächen aufweist und die anzubringenden Formflächen durch eine nachfolgende spannabhebende Bearbeitung angebracht werden.

Dies ist ein wesentlicher Vorteil gegenüber dem Stand der Technik (zum Beispiel der DE 39 22 240 A1), weil dort ein stoßfreier Übergang nicht erreicht werden konnte.

Bezogen auf die Figur 3 der genannten Druckschrift vermag es die vorliegende Erfindung nun, die in dieser Figur dargestellten stoßbehafteten Übergänge 34 einzusparen und zu eliminieren während die anderen - dort gezeigten - Übergangsbereiche 32 in der vorliegenden Erfindung durch konturenlos und stoßfrei ineinander übergehende Formflächen ersetzt werden.

Der Erfindungsgegenstand der vorliegenden Erfindung ergibt sich nicht nur aus dem Gegenstand der einzelnen Patentansprüche, sondem auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

### Es zeigen:

- Figur 1:: Schnitt durch eine erste Ausführungsform einer Rohrweiche in der ersten Durchgangsstellung;
- Figur 2:: Schnitt durch die Rohrweiche nach Figur 1 in der zweiten Durchgangsstellung;
- Figur 3:: Schnitt durch eine zweite Ausführungsform einer Rohrweiche mit einem 90° Abgang in der ersten Durchgangsstellung;
- Figur 4:: Schnitt durch eine Rohrweiche nach Figur 3 in der zweiten Abgangsstellung;
- Figur 5:: Schnitt gemäß der Linie V-V in Figur 3 unter Weglassung des Drehschiebers;
- Figur 6:: perspektivische Ansicht in Pfeilrichtung VI in das Gehäuse der Rohrweiche hinein;
- Figur 7:: perspektivische Darstellung eines Drehschiebers in einer ersten Ausführungsform;
- Figur 8:: perspektivische Darstellung eines Drehschiebers in der zweiten Ausführungsform;
- Figur 9:: perspektivische Darstellung des Drehschiebers nach Figur 7 in vereinfachter Darstellung.

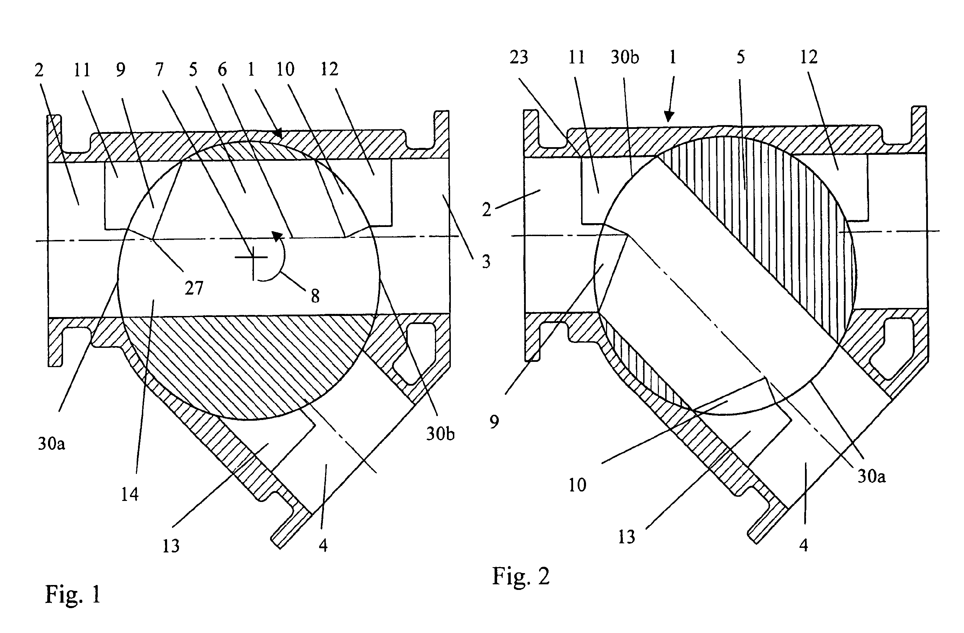

In Figuren 1 und 2 ist eine Rohrweiche 1 mit einem Eingang 2 und zwei Abgängen 3, 4 darstellt, die im Winkel von 45° zueinander angeordnet sind.

Im Gehäuse der Rohrweiche 1 ist ein Drehschieber 5 im Bereich der Drehachse 7 beispielsweise in Pfeilrichtung 8 drehbar gelagert, mit dem Ziel, einen Eingang 2 wahlweise mit dem Abgang 3 oder dem Abgang 4 zu verbinden.

Der Vorteil der Erfindung liegt nun darin, dass man im Bereich des Halbrohr-Durchgangs 30 einen praktisch vollkommen stoßfreien und übergangslosen drehrunden Bereich zwischen dem Eingang 2 und der Durchgangsbohrung 14 des Drehschiebers 5 erreicht.

Erfindungsgemäß sind nun jeweils in den gehäusefesten Eingangs- und Ausgangsbereichen 2, 3, 4 des Gehäuses der Rohrweiche 1 Formflächen 11, 12, 13 eingearbeitet, welche einen stoßfreien Übergang zu den zugeordneten Flächen im Bereich der Durchgangsbohrung 14 des Drehschiebers 5 bilden.

Wichtig ist hierbei, dass diesen gehäusefesten Formflächen 11, 12, 13 zugeordnete drehschieberseitige Formflächen 9, 10 gegenüberliegend angeordnet sind, die sich gegenseitig in der Form ergänzen, sich übergangsfrei fortsetzen und so einen stetigen, stoßfreien Übergang bilden.

Nachdem der Drehschieber selbst drehsymmetrisch ist, ist jede drehschieberseitige Formfläche 9, 10 jeweils doppelt vorhanden, wobei die hierzu symmetrische Formfläche mit 9a und 10a bezeichnet ist.

Die Längsachse 6 durch die Durchgangsbohrung 14 fluchtet mit den Längsachsen durch den Eingang 2 und den zugeordneten Eingängen 3 und 4.

Dies ist in Figuren 1 und 2 dargestellt, wo erkennbar ist, dass der Halbrohr-Durchgang 30a, der vorher mit dem Eingang 2 fluchtete und einen stetigen stoßfreien Übergang bildete, sich nun bei Umschaltung des Eingangs 2 auf den Abgang 4 nun in den Abgang 4 bewegt, während in analoger Weise der Halbrohr-Durchgang 30b sich gemäß Figur 2 in den Eingang 2 bewegt hat.

Weil dieser halbrohr-Durchgang 30a, 30b winkelig zum Eingang 2 steht, deckt sich die gehäuseseitige Formfläche kongruent mit dem Halbrohr-Durchgang 30b. Daher gibt es einen stoßfreien Übergang, in dem keinerlei Stoßkanten vorhanden sind.

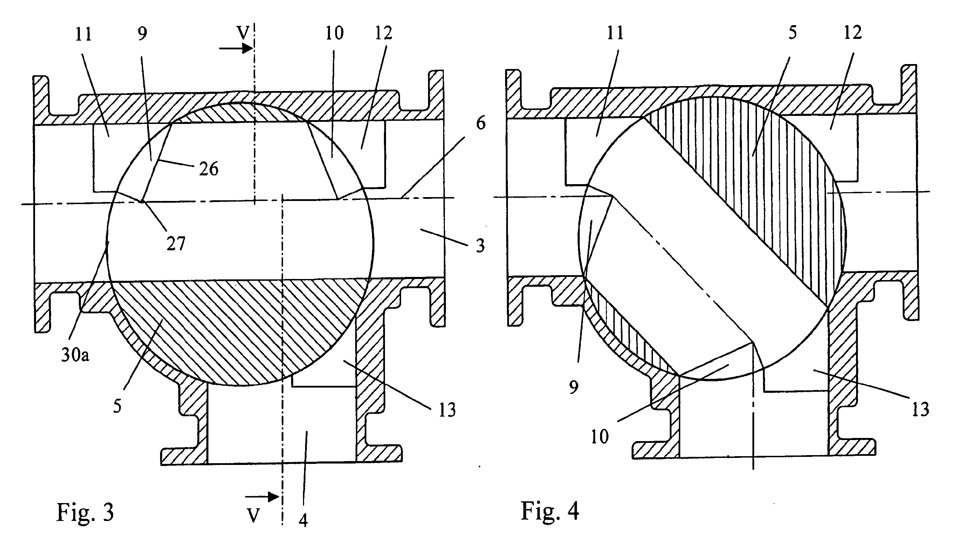

Die gleichen Verhältnisse gelten für die Figuren 3 und 4, die nur in Abweichung zu dem Ausführungsbeispiel nach den Figuren 1 und 2 eine Rohrweiche mit einem 90°-Abgang 4 zeigen.

In analoger Weise gelten diese Verhältnisse auch für den unteren Teil des Durchgangs, weil der Halbrohr-Durchgang vom Gehäuse sich kongruent und stoßfrei mit der zugeordneten Formfläche aneinander anfügt.

Somit ist es erstmals beim Drehen (das heißt bei der spannabhebenden Bearbeitung des Drehschiebers und des Gehäuses) gelungen in allen Abgangsstellungen der Rohrweiche deckungsgleiche Konturen zwischen der gehäuseseitigen Kontur und der drehschieberseitigen Durchgangsbohrung zu erreichen.

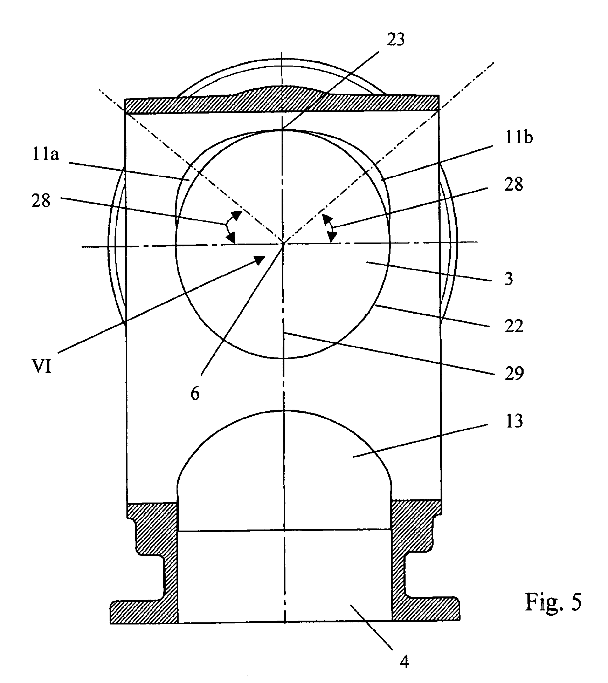

Weitere Einzelheiten ergeben sich aus Figur 5, die ein Schnitt gemäß der Linie V-V in Figur 3 ist.

Dort ist der Drehschieber 5 entfernt und es ist erkennbar, dass etwa ohrenförmige Formflächen 11 im oberen Bereich der gehäuseseitigen Durchgangsbohrung angebracht sind, wobei der Mittenwinkel durch diese Formflächen 11 zum Beispiel einen Winkel 28 von 38° entspricht.

Dieser Winkel von 38° ist abhängig von der Wahl des Abgangswinkels, das heißt ob es sich um eine 45° oder um eine 90°-Weiche handelt.

Es ergibt sich zwischen den beiden Formflächen 11a, 11b ein Berührungspunkt 23 der auf der Mantelfläche 16 des Drehschiebers 5 abdichtend aufsitzt.

Ferner ist erkennbar, dass die beiden Formflächen 11a und 11 b spiegelsymmetrisch zu der Längsmittenachse 29 sind und radial auswärts von der Begrenzungslinie 22 der Durchgangsbohrung nach außen erweitert angebracht sind.

Aus Figur 5 ergibt sich auch, dass die gehäuseseitige Formfläche 13 im unteren Abgang 4 sich ebenfalls ergänzt aus zwei spiegelsymmetrisch zur Längsmittenachse 19 stehenden Teilflächen, die Vereinfachung wegen nicht mit dem Buchstaben a und b bezeichnet sind.

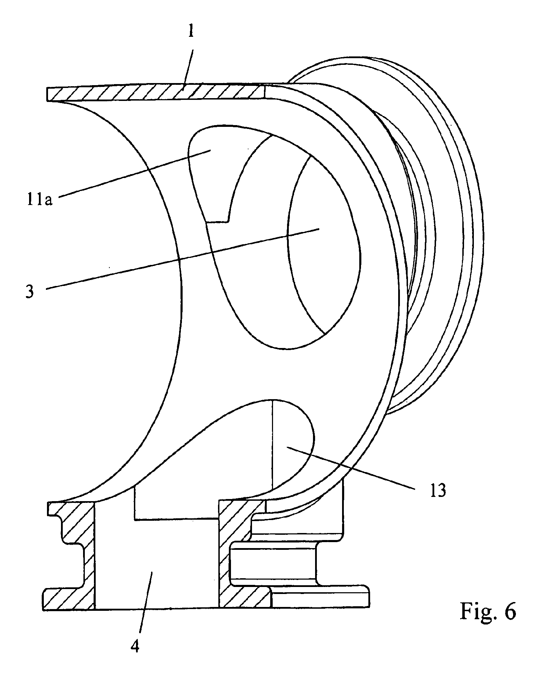

Die Figur 6 zeigt eine perspektivische Ansicht in Richtung auf den Abgang der Rohrweiche 1, wo erkennbar ist, das die linke Formfläche 11 a im oberen Bereich vorhanden ist. Die rechte Formfläche 11 b ist verdeckt.

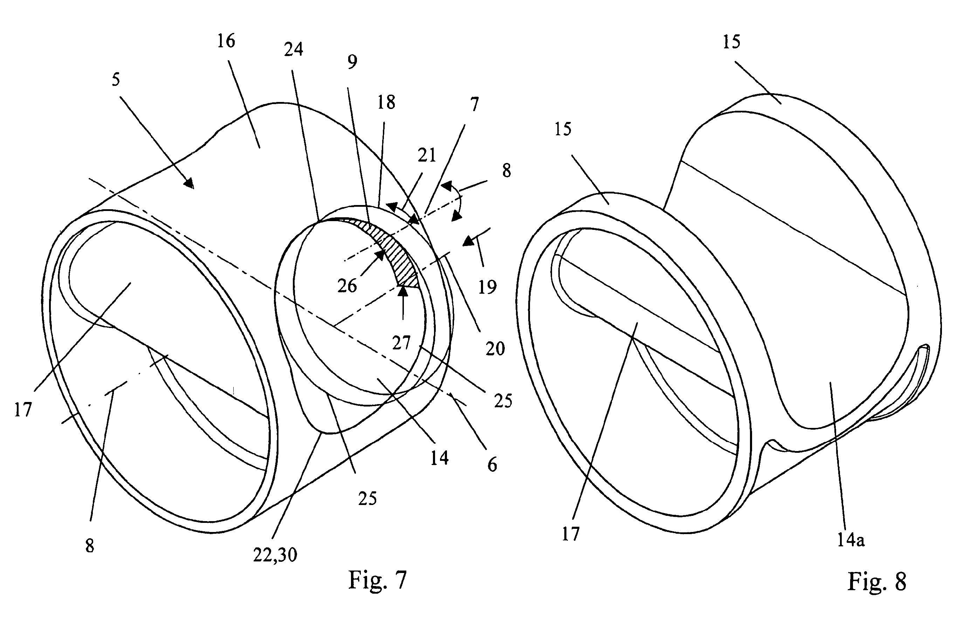

Aus der Figur 7 und 8 gehen weitere Einzelheiten unterschiedlicher Drehschieberformen hervor, wobei der Drehschieber nach Figur 8 ein sogenannter Pulver-Drehschieber ist. Mit diesen sollen leicht anbackbare Materialen gefördert werden und es ist erkennbar, dass die vorher vorhandene Mantelfläche 16 des Drehschiebers 5 minimiert ist. Das Dach der Mantelfläche wurde entfernt, so dass sich nur noch seitliche Anlageflächen 15 für einen in Figur 8 dargestellten Drehschieber ergeben und hiermit eine halboffene Durchgangsbohrung 14a.

Ansonsten gelten aber für die gleichen Teile die gleichen Bezugszeichen. Dementsprechend sind bei dem Drehschieber nach Figur 8 die Formflächen 9 und 10 entfallen, weil diese nicht mehr notwendig sind.

Und die Formflächen 11, 12, 13 im Gehäuse sind jedoch nach wie vor vorhanden, um die anhand der Figuren 1 und 2 beschriebenen Anpassungen in Form der Halbrohrdurchgänge 30a, 30b weiterhin beizubehalten.

Der Vereinfachung wegen sind irgendwelche Dichtungen im Bereich der Drehschieber nach den Figuren 7 und 8 nicht dargestellt, welche geeignet sind, sich abdichtend an der Innenseite der Rohrweiche 1 anzulegen.

Außerdem ist der Vereinfachung wegen nicht dargestellt, dass auch gehäuseseitige Dichtungen im Bereich des Eingangs 2 unter der Abgänge 3, 4 vorhanden sein können, die sich abdichtend am Außenumfang des Drehschiebers 5 anlegen.

In Figur 7 ist aus Materialersparnis-Gründen die Seitenwand 17 des Drehschiebers 5 eingezogen dargestellt, das heißt es sind entsprechende Ausfräsungen vorhanden, um Vollmaterial an diesen Bereich zu sparen.

Eine solche Einsparung kann auch bereits schon in der Gussform vorgesehen werden.

Wichtig ist, dass im Bereich der Durchgangsbohrung 14 nun ein Bearbeitungswerkzeug in Pfeilrichtung 19 eingefahren wird, welches der Bewegungskurve 18 folgt.

Es handelt sich in der Regel um einen Fräser, der diese Bewegungskurve 18 folgt und hierbei in Halbkreisbewegungen 21 verfahren wird.

Die äußere Begrenzung der Bewegungskurve für den Fräser ist hierbei mit der Bewegungskurve 18 und innere Begrenzung ist durch Bearbeitungskreis 25 dargestellt.

Er fährt somit von beiden Seiten in die Durchgangsbohrung 14 des Drehschiebers hinein und beendet an der Stelle den Bearbeitungsvorgang genau auf der Höhe der Mittellinie bei Position 27, an der die Bearbeitungslinie 18 mit der Drehschieberbohrung 14 einen halben Ellipsenschnitt bildet.

Dieser Ellipsenschnitt wird durch die Begrenzungslinie 26 in Figur 7 dargestellt. Es ergibt sich somit ein eingangs- und ausgangsseitig des Drehschiebers jeweils zwei zueinander spiegelsymmetrische Formflächen 9a, 9b und 10a, 10b, wobei die in Figur 7 hierzu spiegelsymmetrische Formfläche 9b verdeckt ist.

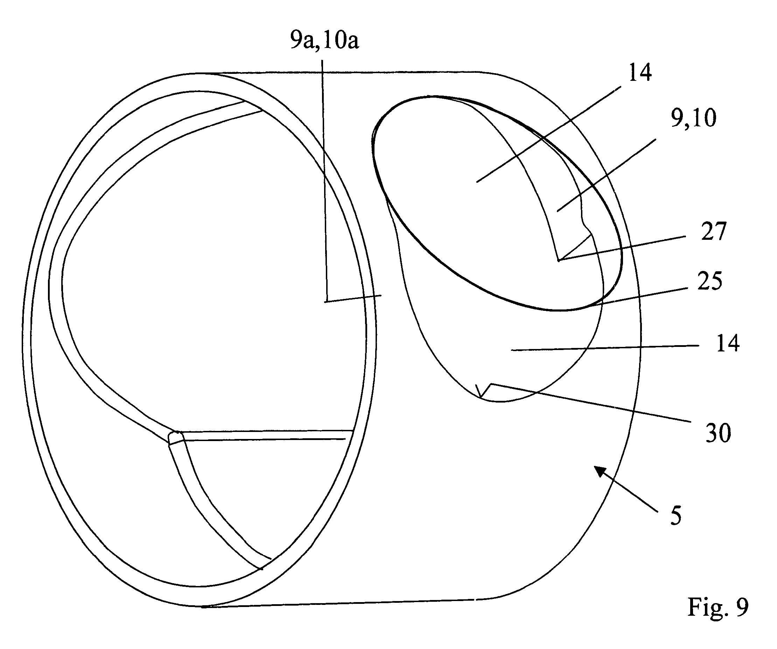

Dies ist in Figur 9 dargestellt, wo erkennbar ist, dass der Formfläche 9 eine (verdeckte) spiegelsymmetrische Formfläche 9a zugeordnete ist.

Der Einfachheit halber wurde in Figur 9 auch noch angegeben, dass die Formfläche 10 auf der gegenüberliegenden Seite in der gleichen Weise angebracht wird. Es ergeben sich somit die Formflächen 10 und 10a.

Die Linie 20 bildet hierbei die Bewegungsrichtung des Fräsers in Pfeilrichtung. 19, wobei diese Linie beispielsweise im Winkel von 45° zur Längsachse 6 der Durchgangsbohrung 14 gerichtet ist.

Hierbei liegt ein Punkt halb-ellipsenförmigen Formfläche 9, 10 bei Position 27 auf dieser Linie 20. Der Fräser beginnt hierbei im Anfangspunkt 24 spannabhebend zu arbeiten, um die Formflächen 9, 10 zu erzeugen.

In Umkehrung der Bearbeitungsrichtung kann auch der Fräserfinger am Punkt 24 parallel zur Mittellinie 6 angesetzt werden und die Bearbeitung von dieser Seite her durchführen. Er kippt dann um seine Querachse.

Vorteil der erfindungsgemäßen Maßnahmen ist, dass durch die Anbringung von Formflächen jeweils im oberen Bereich des Eingangs 2 und der Abgänge 3, 4 diesen Formflächen wahlweise entweder ein Halbrohr-Durchgang im Drehschieber oder ebenfalls stoßfrei anschließende halbellipsenförmige Formflächen 9, 10 im Drehschieber zugeordnet werden.

In allen Drehstellungen ist somit ein Stoß im Kanal ausgeschlossen.

Nachdem sich lediglich Formflächen gegenüberliegen, bilden sich relativ flache Taschen, die keine sackartigen Erweiterungen darstellen, so dass nicht die Gefahr besteht, dass sich dort Granulat in diesen Taschen ablagert und fängt. Bei einer Nennweite von 80 mm einer Rohrweiche beträgt die Tiefe einer solchen Tasche nur ca. 2 mm. Bei einer Nennweite von etwa 250 mm beträgt die Tiefe der Tasche etwa an der tiefsten Stelle nur 15 mm.

### Zeichnungslegende

- 1: Rohrweiche
- 2: Eingang
- 3: Abgang
- 4: Abgang
- 5: Drehscheibe
- 6: Längsachse
- 7: Drehachse
- 8: Pfeilrichtung
- 9: Formfläche (Drehsch.)
9a
- 10: Formfläche (Drehsch.)
10a
- 11: Formfläche (Gehäuse)
- 12: Formfläche
- 13: Formfläche (Gehäuse)
- 14: Durchgangsbohrung
14a
- 15: Anlagefläche
- 16: Mantelfläche
- 17: Seitenwand
- 18: Bewegungskurve Fräser
- 19: Pfeilrichtung
- 20: Linie
- 21: Halbkreisbewegung
- 22: Begrenzungslinie
(Durchgangsbohrung)
- 23: Benutzungspunkt
- 24: Anfangspunkt
- 25: Bearbeitungskreis
- 26: Ellipsenschnitt-Begrenzung
- 27: Position
- 28: Winkel (z. B. 38°)
- 29: Längsmittenachse
- 30: Halbrohr-Durchgang
a, b (Drehschieber)

## Patentansprüche

1. Rohrweiche (1) mit verbessertem Übergang an den Anschlussstutzen, wobei ein Eingang (2) und zwei Abgänge (3, 4) vorhanden sind und ein walzenförmiger Drehschieber (5) mit einem geradlinig ausgebildeten Innenrohr den Eingang (2) mit den Abgängen (3, 4) verbindet, **dadurch gekennzeichnet, dass** alle drei Ein- und Abgänge (2-4), sowie die jeweils gegenüberliegende Kontur der Drehschieberbohrung (14) in gleicher Form ausgeführt sind und dass im Bereich des Einganges (2) und der beiden Abgänge (3, 4) jeweils zwei gehäuseseitige, taschenförmige und spiegelsymmetrisch zur Längsmittenachse (29) ausgebildete Formflächen (11, 12, 13) als taschenförmige Vertiefung in dem Material der Rohrweiche (1) eingearbeitet sind, wobei diesen gehäusefesten Formflächen (11, 12, 13) stoßfrei und übergangslos anschließende Formflächen (9, 9a, 10, 10a) im Drehschieber (5) gegenüberliegen, die in das Material des Drehschiebers (5) vertieft eingearbeitet sind.

2. Rohrweiche nach Anspruch 1, **dadurch gekennzeichnet, dass** die Längsachse (6) durch die Durchgangsbohrung (14) mit den Längsachsen durch den Eingang (2) und den zugeordneten Eingängen (3 und 4) fluchtet.

3. Rohrweiche nach Anspruch 1 oder 2, **dadurch gekennzeichnet, dass** etwa ohrenförmige Formflächen 11 im oberen Bereich der gehäuseseitigen Durchgangsbohrung (2, 3, 4) angebracht sind, wobei der Mittenwinkel durch diese Formflächen (11) einem Winkel (28) von 38° bei einem Winkel des Abganges von 45 Grad entspricht.

4. Rohrweiche nach einem der Ansprüche 1 bis 3, **dadurch gekennzeichnet, dass** die beiden gehäuseseitigen Formflächen (11a und 11 b) spiegelsymmetrisch zu der Längsmittenachse (29) sind und radial auswärts von der Begrenzungslinie (22) der Durchgangsbohrung nach außen erweitert angebracht sind.

5. Verfahren zur Herstellung einer Rohrweiche mit einem Eingang (2) und zwei Abgängen (3, 4), mit einem im Gehäuse der Rohweiche drehbaren, walzenförmigen Drehschieber (5), der eine Durchgangsbohrung (14, 14a) aufweist, die in Gegenüberstellung zu den gehäuseseitigen Ein- und Abgängen bringbar ist, **dadurch gekennzeichnet, dass** zur Herstellung eines nahezu stoßfreien Überganges zwischen der drehschieberseitigen Durchgangsbohrung (14, 14a) und den gehäuseseitigen Ein- und Abgängen (2-4) ein spanabhebendes Bearbeitungswerkzeug gemäß dem gewählten Winkel des Abzweiges, z. B. von 45° von beiden Seiten in die Durchgangsbohrung (14) des Drehschiebers (5) einfährt, so dass das Bearbeitungswerkzeug an der Stelle den Bearbeitungsvorgang genau auf Höhe der Mittellinie beendet, an der die Bearbeitungslinie (18) mit der Durchgangsbohrung (14) einer halben Ellipsenschnitt bildet und dass die sich ergebende Kontur auf die drei Ein- und Abgänge (2-4) des Weichengehäuses durch Bearbeitung oder Formgießen übertragen wird.

6. Verfahren nach Anspruch 5, **dadurch gekennzeichnet, dass** eingangs- und ausgangsseitig des Drehschiebers (5) jeweils zwei zueinander spiegelsymmetrische Formflächen (9a, 9b und 10a, 10b) hergestellt werden.

7. Verfahren nach einem der Ansprüche 5 oder 6 zur Herstellung einer Rohweiche nach einem der Ansprüche 1 bis 5, **dadurch gekennzeichnet, dass** durch die Anbringung von gehäusefesten Formflächen (11-13) jeweils im oberen Bereich des Eingangs (2) und der Abgänge (3, 4) diesen Formflächen (11-13) wahlweise entweder ein Halbrohr-Durchgang im Drehschieber (5) oder ebenfalls stoßfrei anschließende halbellipsenförmige Formflächen (9, 10) im Drehschieber (5) zugeordnet werden.

## Claims

1. Diverter valve (1) having improved transition at the connecting branches, wherein one inlet port (2) and two outlet ports (3, 4) are provided and a cylindrical rotary valve (5) with a straight inner pipe connects the inlet port (2) to the outlet ports (3, 4), **characterised in that** all three inlet and outlet ports (2 - 4) as well as the respective opposing contour of the rotary valve bore (14) are implemented with the same shape and that in the region of the inlet port (2) and of the two outlet ports (3, 4), two pocket-like shaped surfaces (11, 12, 13) on the housing side that are formed mirror-symmetrically with respect to the longitudinal centre axis (29) are worked into the material of the diverter valve (1) in each case in the form of a pocket-like recess, wherein shaped surfaces (9, 9a, 10, 10a) in the rotary valve (5) adjoining in a smooth and seamless manner oppose these shaped surfaces (11, 12, 13) that are fixed to the housing, and are worked, in a recessed manner, into the material of the rotary valve (5).

2. Diverter valve according to claim 1, **characterised in that** the longitudinal axis (6) through the through-bore (14) is in alignment with the longitudinal axes through the inlet port (2) and the associated inlet ports (3 and 4).

3. Diverter valve according to claim 1 or 2, **characterised in that** approximately ear-like shaped surfaces (11) are provided in the upper region of the through-bore (2, 3, 4) on the housing side, with the centre angle through these shaped surfaces (11) corresponding to an angle (28) of 38° at an outlet port angle of 45 degrees.

4. Diverter valve according to any one of claims 1 to 3, **characterised in that** the two shaped surfaces (11 a and 11 b) on the housing side are provided mirror-symmetrically with respect to the longitudinal centre axis (29) and are provided radially outwardly from the boundary line (22) of the through-bore, widening toward the outside.

5. Method for producing a diverter valve comprising an inlet port (2) and two outlet ports (3, 4), with a cylindrical rotary valve (5) being rotatable inside the housing of the diverter valve and having a through-bore (14, 14a) that is moveable onto a position opposite the inlet and outlet ports on the housing side, **characterised in that** to produce a nearly smooth transition between the through-bore (14, 14a) on the rotary valve side and the inlet and outlet ports (2 - 4) on the housing side, a metal cutting machining tool is inserted in accordance with the selected angle of the branch of, for example 45°, into the through-bore (14) of the rotary valve (5) from both sides in such a way that the machining tool terminates the machining process exactly at the level of the centre line at the point at which the machining line (18) forms half an ellipsoidal section with the through-bore (14), and that the resulting contour is transferred to the three inlet and outlet ports (2 - 4) of the diverter housing by machining or mould casting.

6. Method according to claim 5, **characterised in that** two shaped surfaces (9a, 9b and 10a, 10b) which are mirror-symmetrical with respect to one another in each case are produced on the inlet and outlet side of the rotary valve (5).

7. Method according to any one of claims 5 or 6 for producing a diverter valve according to any one of claims 1 to 5, **characterised in that** by providing shaped surfaces (11 - 13) in the upper region of the inlet port (2) and the outlet ports (3, 4) in each case that are fixed to the housing, these shaped surfaces (11 - 13) optionally either have an associated half-pipe passage in the rotary valve (5) or likewise smoothly adjoining hemiellipsoidal shaped surfaces (9, 10) in the rotary valve (5).

## Revendications

1. Aiguillage de tuyau avec une transition améliorée au niveau des raccords, étant précisé qu'il est prévu une entrée (2) et deux sorties (3, 4), et qu'une vanne rotative en forme de rouleau (5) pourvue d'un tube intérieur rectiligne relie l'entrée (2) aux sorties (3, 4),
**caractérisé en ce que** les trois entrées et sorties (2-4) et le contour opposé du perçage de vanne rotative (14) ont la même forme, et **en ce que** dans la zone de l'entrée (2) et des deux sorties (3, 4), deux surfaces profilées situées côté boîtier (11, 12, 13) en forme de poches et disposées en miroir par rapport à l'axe longitudinal médian (29) sont réalisées sous la forme de creux en forme de poches dans la matière de l'aiguillage de tuyau (1), étant précisé qu'en face de ces surfaces profilées (11, 12, 13) prévues côté boîtier, des surfaces profilées (9, 9a, 10, 10a) continues et sans transition sont creusées dans la matière de la vanne rotative (5).

2. Aiguillage de tuyau selon la revendication 1, **caractérisé en ce que** l'axe longitudinal (6) qui traverse le perçage de passage (14) est dans l'alignement des axes longitudinaux qui traversent l'entrée (2) et les entrées associées (3 et 4) .

3. Aiguillage de tuyau selon la revendication 1 ou 2, **caractérisé en ce que** des surfaces profilées à peu près en forme d'oreilles (11) sont prévues dans la zone supérieure du perçage de passage (2, 3, 4) situé côté boîtier, l'angle au centre pour ces surfaces profilées (11) correspondant à un angle (28) de 38° si l'angle de la sortie est de 45 degrés.

4. Aiguillage de tuyau selon l'une des revendications 1 à 3, **caractérisé en ce que** les deux surfaces profilées (11a et 11b) prévues côté boîtier sont disposées en miroir par rapport à l'axe longitudinal médian (29) et sont élargies vers l'extérieur, radialement, à partir de la ligne de démarcation (22) du perçage de passage.

5. Procédé pour fabriquer un aiguillage de tuyau avec une entrée (2) et deux sorties (3, 4), et avec une vanne rotative en forme de rouleau (5) qui est apte à tourner dans le boîtier de l'aiguillage et qui présente un perçage de passage (14, 14a) apte à être amené en face des entrées et sorties prévues côté boîtier,
**caractérisé en ce que** pour la réalisation d'une transition quasiment continue entre le perçage de passage (14, 14a) situé côté vanne rotative et les entrées et sorties (2-4) situées côté boîtier, un outil d'usinage par enlèvement de copeaux entre par les deux côtés dans le perçage de passage (14) de la vanne rotative (5), selon l'angle choisi pour l'embranchement, par exemple 45°, de sorte que l'outil d'usinage termine l'usinage exactement à la hauteur de l'axe médian où la ligne d'usinage (18) forme avec le perçage (14) une demi-coupe ellipsoïdale, et **en ce que** le contour obtenu est transféré par usinage ou moulage aux trois entrées et sorties (2-4) du boîtier d'aiguillage.

6. Procédé selon la revendication 5, **caractérisé en ce que** deux surfaces profilées disposées en miroir (9a, 9b et 10a, 10b) sont réalisées côté entrée et côté sortie de la vanne rotative (5).

7. Procédé selon la revendication 5 ou 6 pour fabriquer un aiguillage de tuyau selon l'une des revendications 1 à 5, **caractérisé en ce qu'**en réalisant des surfaces profilées situées côté boîtier (11-13), dans la zone supérieure de l'entrée (2) et des sorties (3, 4) on associe à ces surfaces profilées (11-13) au choix un perçage de demi-tube dans la vanne rotative (5) ou des surfaces profilées en forme de demi-ellipses (9, 10) qui se prolongent là aussi de manière continue, dans la vanne rotative (5).
